# EUROPÄISCHE PATENTSCHRIFT

(11) **EP 2 907 319 B1**
(45) Veröffentlichungstag und Bekanntmachung des Hinweises auf die Patenterteilung: **07.08.2019**
(21) Anmeldenummer: 13802222.3
(22) Anmeldetag: 09.10.2013
(51) Int. Cl.: H04N 21/462, H04N 21/4627, H04N 21/4784, H04N 21/81, G06Q 30/02, G07F 17/32

(54) **VERFAHREN ZUR EINBLENDUNG VON VIDEOWERBEMITTELN IN BROWSERANWENDUNGEN**
METHOD FOR SHOWING VIDEO ADVERTISEMENTS IN BROWSER APPLICATIONS
PROCÉDÉ POUR AFFICHER DES MATÉRIELS PUBLICITAIRES VIDÉO DANS DES NAVIGATEURS

(30) Priorität: 09.10.2012 DE 102012019726
(43) Veröffentlichungstag der Anmeldung: 19.08.2015
(73) Patentinhaber: ATG Ad Tech Group GmbH, 22765 Hamburg (DE)
(72) Erfinder: WERKHAUSEN, Marlon, 22607 Hamburg (DE); WEBER, Heiko, 21644 Sauensiek (DE)
(74) Vertreter: Spahn, Tobias
(86) Internationale Anmeldenummer: PCT/DE2013/000577
(87) Internationale Veröffentlichungsnummer: WO 2014/056475

(56) Entgegenhaltungen:
- WO-A2-2011/133507
- US-A1- 2009 248 524
- US-A1- 2012 158 527
- "Digital Video Ad Serving Template (VAST) - Version 1.8", , 29. Juli 2008 (2008-07-29), XP055105841, Gefunden im Internet: URL:http://www.iab.net/media/file/VAST-1_8 _pub_comment_FINAL.pdf [gefunden am 2014-03-06]
- "Interactive Advertising Bureau (IAB) Impression Exchange Implementation Guidelines - Version 2.0", , 1. Oktober 2011 (2011-10-01), XP055105990, Gefunden im Internet: URL:http://www.iab.net/media/file/IABIESIm plementationGuidelinesv2.pdf [gefunden am 2014-03-06]
- ALEX X LIU ET AL: "A secure cookie scheme", COMPUTER NETWORKS, ELSEVIER SCIENCE PUBLISHERS B.V., AMSTERDAM, NL, Bd. 56, Nr. 6, 17. Januar 2012 (2012-01-17), Seiten 1723-1730, XP028468571, ISSN: 1389-1286, DOI: 10.1016/J.COMNET.2012.01.013 [gefunden am 2012-01-31]
- "VIDEO AD SERVING TEMPLATE (VAST) VERSION 3.0", , 19. Juli 2012 (2012-07-19), XP055103404, Gefunden im Internet: URL:http://www.iab.net/media/file/VASTv3.0 .pdf [gefunden am 2014-02-20]
- "Platform status report: GAME ADVERTISING", , 13. Januar 2012 (2012-01-13), XP055103735, Gefunden im Internet: URL:http://www.iab.net/media/file/IAB-Game s-PSR-Update_0913.pdf [gefunden am 2014-02-21]

## Beschreibung

### 1. Technisches Gebiet:

Die vorliegende Erfindung betrifft ein computerbasiertes Verfahren zur manipulationssicheren Einbindung von Video-Werbemitteln in browserbasierte Informations- und Unterhaltungsanwendungen.

### 2. Stand der Technik:

Der Ausbau von Breitband-Datenkommunikationsverbindungen und eine stetig steigende Rechenleistung von digitalen Endgeräten sorgen für eine wachsende Akzeptanz, Reichweite und Verbreitung von Videoinhalten in digitalen Netzwerken. Dies führt auch zu einer größeren Verbreitung von Videowerbung in digitalen Netzwerken. Für Werbetreibende hat dies den Vorteil, dass Video-Werbemittel medienübergreifend verbreitet und Werbekampagnen über klassische Werbekanäle (TV, Kino) hinweg auf interaktive Werbekanäle (klassisches Internet, Online-Games, Social Communities) verlängert werden können. Interaktive Werbekanäle wie das Internet bieten hierbei vielfältige Mittel, um die Rezeption, Akzeptanz und Streuung von Werbung zu überwachen und optimieren (automatisierte Werbewirksamkeits- und Erfolgskontrolle, die automatisierte Registrierung des Nutzerverhaltens während der Rezeption des Werbemittels (User Behaviour Tracking), verbesserte Zielgruppenorientierung, erhöhte Konversion). Gleichzeitig mit dem Ausbau der Netze und der Leistungsfähigkeit der Hard- und Software-Umgebungen netzfähiger Endgeräte steigt auch die Verbreitung und Beliebtheit browserbasierter Informations- und Unterhaltungsanwendungen, bspw. browserbasierter Computerspiele (auch als "Browser-Games" bezeichnet), d.h. interaktive Anwendungen, welche einen Web-Browser als Benutzerschnittstelle und Laufzeitumgebung nutzen. Zur Generierung von Werbelösen mit den oftmals kostenlos nutzbaren Anwendungen werden diese als mediales Umfeld zur Platzierung von Werbung genutzt (herkömmliche Werbung auf Websites, aber etwa auch In-Game-Advertising oder In-Video-Advertising). Hierbei werden auch Video-Werbemittel platziert (Videowerbung auf Websites, In-Game Video-Advertising). Zur technischen Umsetzung netzbasierter Video-Werbung und zur technischen Koordination der an netzbasierten Video-Advertising-Kampagnen beteiligten Stellen und Anbieter (Content-Anbieter, Advertiser, Mediaagenturen, Adserver-Betreiber) wurden internationale technische Standards für Werbeformate und Prozesse durch die IAB (Interactive Advertising Bureau) definiert, welche im Wesentlichen auch vom OVK (Online-Vermarkterkreis) im BVWD (Bundesverband der Digitalen Wirtschaft) unterstützt werden. Der VAST-Standard (Digital Video Ad Serving Template) definiert die Kommunikation zwischen Video-Player und Adserver als Framework. Mit dem Framework wird die Bestückung von HTML-fähigen Video-Playern mit Video-Werbemitteln und die Konfiguration von automatisierten Überwachungsfunktionalitäten gesteuert. Auf einen Aufruf hin werden die Informationen über den Werbemitteltyp, die Quelle für das Werbemittel, verschiedene Tracking-Events des Werbemittels mittels XML an den Video-Player übermittelt und vor dem Abspielen des eigentlichen Video-Inhaltes geladen. Server können Informationen mit allen Video-Playern, die diesen Standard unterstützen, austauschen. HTML-fähige Video-Player können einfach in Websites, bspw. innerhalb eines sog. iframes (auch als inlineframe bezeichnet), integriert werden. Diese technische Basis ermöglicht gleichzeitig eine Integration von Videowerbung in browserbasierte Informations- und Unterhaltungsanwendungen, bspw. browserbasierte Computerspiele. Die Erfahrung hat hierbei gezeigt, dass die Platzierung von Videowerbung in solchen Anwendungen beim Nutzer häufig auf Ablehnung stößt. Nutzer akzeptieren die eingeblendete Videowerbung häufig nicht und brechen entweder das Abspielen der Werbung ab, oder verlassen die Anwendung und Website, falls dies nicht möglich ist.

### 3. Darstellung der Erfindung:

Es ist wünschenswert, beim Nutzer eine höhere Akzeptanz für Videowerbung in browserbasierten Informations- und Unterhaltungsanwendungen (im Weiteren kurz: Browseranwendungen) zu schaffen. Der Erfindung liegt die daher Aufgabe zugrunde, ein computerimplementiertes Verfahren zur automatisierten Einbindung von Video-Werbemitteln in Browseranwendungen bereitzustellen, welches innerhalb bestehender und zukünftiger Standards für Online-Videowerbung implementierbar ist und welches geeignet ist, auf Seiten des Nutzers eine höhere Akzeptanz für die Rezeption der Werbung zu erreichen. Gleichzeitig soll dieses Verfahren manipulationssicher ausgestaltet sein.

Die Aufgabe wird erfindungsgemäß durch ein durch ein computerimplementiertes Verfahren zur automatisierten Einbindung von Video-Werbemitteln in Browseranwendungen mit den Merkmalen des Anspruchs 1 gelöst, vorteilhafte Ausführungen sind in den Unteransprüchen beschrieben.

Den Kern der Erfindung bildet ein computerimplementiertes Verfahren zur automatisierten Einbindung von Video-Werbemitteln in Browseranwendungen innerhalb eines Netzwerks, dadurch gekennzeichnet, dass zwischen einem Content-Server und einem Ad-Server ein erster Schlüssel, ein Format für einen Werbungs-ID-Wert und ein Verfahren zur Bildung eines zweiten Schlüssels aus dem ersten Schlüssel und einer Werbungs-ID definiert sind; umfassend die Schritte
a. Angebot zum Abspielen einer Videowerbung und einer Belohnung innerhalb einer Browseranwendung an einen client durch den Content-Server, wobei die Angebotsinformation eine zuvor durch den Content-Server festgelegte Werbungs-ID enthält und auf den Ad-Server verweist;
b. Übermittlung eines Aufrufs der Videowerbung nebst der Werbungs-ID an den Ad-Server durch den client;
c. Übermittlung eines browserbasierten Video-Players und einer Adressinformation für ein Video-Werbemittel nebst der Werbungs-ID an den client durch den Ad-Server;
d. Abruf und Abspielen des Video-Werbemittels anhand der Adressinformation durch den client;
e. Meldung des Abspielens der Videowerbung und Mitteilung der Werbungs-ID an den Ad-Server durch den client;
f. Generierung eines zweiten Schlüssels anhand der Werbungs-ID und des ersten Schlüssels durch den Ad-Server und Übermittlung an den client;
g. Übermittlung der Werbungs-ID und des zweiten Schlüssels an den Content-Server durch den client;
h. Verifizierung des zweiten Schlüssels durch den Content-Server und Freischaltung der Belohnung durch den Content-Server für den client bei positiver Verifizierung.

Ein Video-Werbemittel ist im Sinne der Erfindung jeder Werbefilm in Form eines in einem Browser innerhalb eines Video-Players darstellbaren digitalen Medieninhalts. Ein Content-Server stellt innerhalb eines Netzwerks eine Browseranwendung für clients zur Verfügung. Unter Netzwerk im Sinne der Erfindung sind jegliche Datenkommunikationsverbindungen zu verstehen, die einen bidirektionalen Datenaustausch zwischen Rechnern (programmierbaren Datenverarbeitungseinrichtungen) ermöglichen. Ein Server (im hier verwendeten Sinne auch als host bezeichnet) ist hierbei ein Rechner (dedizierter Server) oder Rechnerverbund (virtueller Server innerhalb eines Server-Clusters oder Arrays oder eines Cloud-Systems), welcher einen Dienst (eine Funktion oder eine Funktionsmenge) für andere Rechner über ein Netzwerk zur Verfügung stellt. Ein Client ist im Sinne der Erfindung jeder Rechner, auf welchem ein Browser, d.h. ein Programm zur Darstellung von digitalen Medieninhalten, bspw. Websites, lauffähig ist, und mit welchem Browseranwendungen, etwa Websites oder browserbasierte Computerspiele, von einem Server über ein Netzwerk abgerufen und genutzt werden können. Ein Ad-Server stellt innerhalb desselben Netzwerks einen Video-Player sowie eine Adressinformation für ein Video-Werbemittel zur Verfügung. Der Video-Player client dem Abspielen eines Werbevideos im Browser des Nutzers. Derartige Player zum Abspielen von Video-Inhalten können entweder direkt auf die Laufzeitumgebung des Browsers (möglich ab HTML5 Standard) oder eines zusätzlichen Erweiterungsprogramms für den Browser (auch als Plug-in bezeichnet, z.B. den "Adobe Flash Player") aufsetzen. Die genaue Auswahl und Ausgestaltung der Player-Software richtet sich nach den jeweiligen konkreten Anforderungen, d.h. danach, welche Videoformate und sonstigen technischen Standards (z.B. VAST) konkret unterstützt werden sollen, sowie nach dem jeweiligen aktuellen Verbreitungsgrad der verfügbaren technischer Plattformen. Zwischen dem Content-Server und dem Ad-Server sind ein erster Schlüssel, ein Format für Werbungs-ID-Werte und ein Verfahren zur Bildung eines zweiten Schlüssels aus dem ersten Schlüssel und einem Werbungs-ID-Wert definiert. Schlüssel und ID-Werte sind bestimmte Zeichenfolgen, die ein bestimmtes Zeichenformat besitzen.

Das Verfahren zur Bildung des zweiten Schlüssels ist in Abhängigkeit von der Art gewählten Schlüssels und des Werbungs-ID-Formats sowie in Abhängigkeit vom gewünschten Grad der Sicherheit gewählt, bspw. die Bildung alphanumerischer Prüf- oder Quersummen oder eines Hashs mittels einer Hashfunktion. Ein client ist mit dem Content-Server verbunden und hat die Browseranwendung aufgerufen. Das erfindungsgemäße Verfahren wird auf dem Content-Server automatisiert (bspw. zeitgetriggert durch den Ablauf eines bestimmten Zeitintervalls oder eventgetriggert durch eine Aktion in der Browseranwendung) aufgerufen. In Schritt a. legt der Content-Server eine eindeutige Werbungs-ID für das Angebot einer Videowerbung an den client fest und übermittelt ihm innerhalb der aktiven Browseranwendung ein Angebot zum Abspielen einer Videowerbung (bspw. ein mit einem Hyperlink unterlegten entsprechenden grafischen, animierten oder textlichen Hinweis). Hierfür wird dem client gleichzeitig eine Belohnung in der Browseranwendung in Aussicht gestellt. Die Belohnung besteht in der temporären oder dauerhaften Freischaltung einer zusätzlichen Funktionalität innerhalb der im Browser aktiven Anwendung oder in der Verlängerung des zugelassenen Nutzungszeitraums der Anwendung. Die genaue Ausgestaltung der Belohnung wird in Abhängigkeit von der Art der Browseranwendung und dem jeweiligen Anwendungsstatus gewählt, so dass sich für den Nutzer (die Person, welche über den client an der Browseranwendung teilnimmt) innerhalb der Browseranwendung ein Nutzungsvorteil ergibt. Das Angebot ist mit einer Adressinformation (bspw. das Verweisungsziel eines Hyperlinks) verknüpft, die auf den Ad-Server verweist. Sofern der client das Angebot durch die Betätigung der ihm angebotene Funktion annimmt (bspw. durch Betätigung des Hyperlinks), wird der Aufruf in Schritt b. nebst der der Werbungs-ID an den Ad-Server übermittelt. Hierauf übermittelt der Ad-Server an den client in Schritt c. einen browserbasierten Video-Player und eine Adressinformation für ein Video-Werbemittel und gibt die Werbungs-ID an den client zurück. Die Adressinformation verweist auf einen Serverdienst innerhalb des Netzwerks, welcher das Video-Werbemittel zur Verfügung stellt. In Schritt d. ruft der client das Video-Werbemittel anhand der vom Ad-Server übermittelten Adressinformation aus dem Netzwerk ab und spielt dieses im Browser mittels des Video-Players ab. Sobald der die Videowerbung auf dem client abgespielt wurde, wird dies vom client in Schritt e. an den Ad-Server gemeldet und mit der Meldung die Werbungs-ID erneut übermittelt. Der Ad-Server generiert auf die Meldung in Schritt f. mittels des definierten Verfahrens einen zweiten Schlüssel anhand der Werbungs-ID und dem ersten Schlüssel und übermittelt den zweiten Schlüssel und die Werbungs-ID an den client. In Schritt g. übermittelt der client die Werbungs-ID und den zweiten Schlüssel an den Content-Server. Der Content-Server verifiziert in Schritt h. den zweiten vom Ad-Server generierten Schlüssel mittels der Werbungs-ID und dem ersten Schlüssel anhand des definierten Verfahrens und schaltet bei positiver Verifizierung die Belohnung für den client frei.

Die Erfindung hat erkannt, dass die Akzeptanz zur Rezeption von Video-Werbung in Browseranwendungen beim Nutzer erheblich erhöht wird, wenn diese nicht einfach eingeblendet, sondern dem in dem Nutzer innerhalb der übergeordneten Browseranwendung eine Belohnung für das vollständige Abspielen der Werbung gewährt wird. Die Erfindung hat gleichzeitig erkannt, dass dies die Gefahr einer Manipulation durch Nutzer birgt. Würde die Freischaltung der Belohnung einfach durch Rückmeldung des Abspielens und die offene Übergabe einer ID vom client an den Content-Server gewährt, könnte diese Funktion vom Nutzer ausgespäht und künstlich, d.h., ohne dass die Video-Werbung tatsächlich abgespielt wurde, auf dem Content-Server ausgelöst werden. Im Stand der Technik werden derartige ID-Werte üblicherweise als Parameter (alphanumerischer Wert) als Klartext im Header (Nachrichtenkopf) oder im Nachrichtenkörper (Body) von Anfrage (Request) und Antwort (Response) des verwendeten Datenübertragungsprotokolls (z.B. das Hypertext Transfer Protocol = http) übergeben. In diesem Fall kann die Funktion einfach ausgespäht und die vom Content-Server erwartete Meldung, ohne dass die Video-Werbung tatsächlich abgerufen und/oder abgespielt wurde, ausgeführt werden, sobald die ID vom Content-Server festgelegt und mitgeteilt wurde. Dies gilt auch, wenn die ID anstatt im Nachrichtenkopf im Nachrichtenkörper (Body) des Datenübertragungsprotokolls übergeben wird. Letzter besteht bspw. im Falle des http-Protokolls im zu übergebenden Dokument, etwa einer html- oder xml-Datei, welche ebenfalls als Klartext vorliegt. Auch der Inhalt von Dokumenten kann bei unverschlüsselten Datenübertragungsprotokollen clientseitig einfach ausgespäht werden. Im Stand der Technik existieren etliche Programme, mit denen die Datenkommunikation in Netzwerken überwacht, mitgeschnitten und im Quelltext eingesehen sowie ausgewertet werden kann. Für das http-Protokoll sind bspw. etliche derartige Programme als Zusatzprogramme für Browser bekannt (bspw. die Erweiterung "firebug" für den Browser "Firefox"), mit welchen sich der http-Datenverkehr bequem mitschneiden, speichern, einsehen und auswerten lässt. Die einfache Freischaltung durch die Rückgabe eines zuvor mitgeteilten Werts, eines Schlüssels oder einer ID kann so ausgespäht und künstlich ausgelöst werden. Dies kann auch automatisiert durch die Programmierung eines entsprechenden Hilfsprogramms erfolgen. Der Einsatz eines verschlüsselten Datenübertragungsprotokolls (bspw. Hypertext Transfer Protocol Secure = https) stellt keine echte Alternative dar, da diese nur die Übertragungsstrecke zwischen Server und client betrifft und auf Serverseite technisch und rechnerisch aufwändig ist. Das erfindungsgemäße Verfahren bietet demgegenüber den Vorteil, dass es sich auch in bestehenden technischen Infrastrukturen und Standards technisch einfach implementieren lässt und relativ - d.h. in Abhängigkeit von der gewählten Funktion zur Bildung des zweiten Schlüssels - manipulationssicher ist. Da dem client bei dem erfindungsgemäßen Verfahren der erste Schlüssel, welcher nur zwischen dem Content- und dem Ad-Server festgelegt ist, nicht bekannt ist, kann eine Manipulation nur durch einen Rückschluss vom (jeweils neu generierten) zweiten Schlüssel und der Werbungs-ID auf den ersten Schlüssel erfolgen. Dies ist je nach dem gewählten Verfahren zur Bildung des zweiten Schlüssels relativ aufwendig. Etwa bei der Wahl einer kryptografischen Hashfunktion zur Bildung des zweiten Schlüssels - bspw. mittels des MD5-Algorithmus (Message-Digest Algorithm 5) - ist dies sehr zeit- und rechenaufwendig und steht jedenfalls nach dem derzeitigen Stand der Technik in keinem sinnvollen zum möglichen Erfolg (z.B. Freischaltung von Funktionen in einem browserbasierten Computerspiel). Da das zwischen dem Content- und dem Ad-Server festzulegende und entsprechend zu implementierende Verfahren lediglich der Bildung eines Schlüssels, also eines alphanumerischen Werts dient, kann dies im Falle eines festgestellten Missbrauchs auch einfach, d.h. mit geringem technischen Aufwand, geändert werden. Die Auslieferung des Video-Players durch den Ad-Server entlastet den Content-Server von der Aufgabe, selbst einen entsprechenden geeigneten Player bereit zu stellen oder darauf zu vertrauen, dass bereits auf dem client ein solcher Player vorinstalliert ist. Ferner ermöglicht dies eine zentrale Verwaltung der zum Abspielen erforderlichen Player-Software bei dem Ad-Server, wodurch einfach und effektiv eine aktuelle Kompatibilität des verwendeten Video-Players mit den Anforderungen externer Medien-Server sowie mit den jeweiligen technischen Standards (z.B. VAST) gewährleistet ist. Da das erfindungsgemäße Verfahren vorsieht, dass vom Ad-Server lediglich eine Adressinformation für ein Video-Werbemittel übermittelt wird, wird ferner die Funktion des Ad-Servers von der Bereitstellung des Video-Werbemittels getrennt. Dies ermöglicht die Einbindung externer Medien-Server (z.B. von Mediaagenturen), welche Werbe-Videomittel für eine Vielzahl von Werbepartnern innerhalb des Netzwerks bereitstellen, in das erfindungsgemäße Verfahren. Ferner ermöglicht dies die Einbindung von Video-Werbemitteln direkt vom Medien-Server des Werbenden. Indem die Generierung und Übermittlung des zur Freischaltung der Belohnung seitens des Content-Servers erforderlichen zweiten Schlüssels erst nach der Meldung des Abspielens der Videowerbung durch den client erfolgt, wird schließlich auf Seiten des Ad-Servers die Implementierung eine technische Fehler- und Erfolgskontrolle ermöglicht, indem das Abspielen oder Nicht-Abspielen registriert wird. Dies ermöglicht auf Seiten des Ad-Servers auch eine automatisierte Abrechnung von Werbeeinblendungen auf Basis tatsächlich gezeigter, d.h. clientseitig abgerufener und vollständig abgespielter Werbevideos mit dem Werbenden (Advertiser) oder seiner Mediaagentur.

In einer weiteren Ausgestaltung des Verfahrens ist der Ad-Server mit einer Funktion zur Generierung einer erweiterten Werbungs-ID2 ausgebildet und generiert in Schritt c. mit der in Schritt b. übermittelten Werbungs-ID und/oder Werten aus Parametern des Aufrufs gemäß Schritt b. und/oder mittels eines eigenen dritten Schlüssels eine erweiterte Werbungs-ID2, welche er an den client mit der Werbungs-ID und/oder den verwendeten Werten des Aufrufs ausliefert, wobei der client in Schritt e. die Werbungs-ID2 zusätzlich zur Werbungs-ID und/oder den verwendeten Werten des Aufrufs mitteilt und der Ad-Server in Schritt f. den oder die in Schritt e. gelieferten ID-Wert(e) zunächst anhand der Werbungs-ID und/oder den verwendeten Werten des Aufrufs und/oder des dritten Schlüssels verifiziert und das Verfahren nur bei positiver Verifizierung fortführt. Die Funktion zur Bildung des erweiterten Werbungs-ID2-Werts ist in Abhängigkeit von den gewählten Ausgangswerten (Werbungs-ID, und/oder Werten aus Parametern des Aufrufs gemäß Schritt c. und/oder einem eigenen dritten Schlüssel) sowie in Abhängigkeit vom gewünschten Grad der Sicherheit gewählt, bspw. die Bildung alphanumerischer Prüf- oder Quersummen aus mindestens zwei dieser Ausgangswerte oder eines Hashs aus mindestens einem dieser Ausgangswerte mittels einer Hashfunktion. Im Falle der Bildung der Werbungs-ID2 mittels eines dritten Schlüssels ist dieser dritte Schlüssel nur dem Ad-Server bekannt. Gegebenenfalls zur Bildung der Werbungs-ID2 genutzte Parameter, sind jegliche technisch serverseitig automatisiert auslesbaren Informationen des Aufrufs, etwa Werte aus den Protokollheader-Informationen, der Zeitpunkt des Abrufs ("Zeitstempel") usw.. In dieser Ausgestaltung bietet das Verfahren eine zusätzliche Schwelle gegen denkbare Manipulationen auch gegenüber dem Ad-Server. Dem Nutzer des clients wird es so zusätzlich erschwert, die Rückmeldung des Ad-Servers in Schritt f. ohne tatsächlichen Abruf und das Abspielen des Werbevideos manipulativ auszulösen und den so erhaltenen den zweiten Schlüssel in Schritt g. an den Content-Server weiterzugeben, um die Freischaltung der Belohnung, ohne dass die Video-Werbung tatsächlich abgespielt wurde, zu erreichen. Hierzu müsste der Nutzer aus den Informationen die ihm in Schritt c, mit dem Video-Player übermittelt werden, analysieren, welche Information die Werbungs-ID2 ist, sowie als welchen Ausgangsinformationen sie gebildet ist, um diese auch ohne den Abruf und das Abspielen des Video-Werbemittels in Schritt e. an den Ad-Server mitteilen zu können. Im Falle eines festgestellten Missbrauchs kann die Funktion zur Generierung einer erweiterten Werbungs-ID2 auf dem Ad-Server auch einfach, d.h. mit geringem technischem Aufwand, geändert werden, ohne dass hierbei Änderungen auf Seiten des Content-Servers vorgenommen werden müssen.

In einer weiteren Ausgestaltung des Verfahrens ist auf dem Ad-Server und in dem in Schritt c. übermittelten Video-Player ein zusätzlicher erster client-Schlüssel hinterlegt und eine Funktion zur Generierung eines zweiten client-Schlüssels aus dem ersten client-Schlüssel und der Werbungs-ID und/oder der Werbungs-ID2 integriert, wobei der Video-Player in Schritt e. vor der Meldung einen zweiten client-Schlüssel generiert und diesen in der Meldung zusätzlich mitteilt und der Ad-Server den mitgeteilten zweiten client-Schlüssel in Schritt f. zunächst anhand der verwendeten Werte verifiziert und das Verfahren nur bei positiver Verifizierung fortführt. Das Verfahren zur Bildung des zweiten client-Schlüssels ist in Abhängigkeit von der Art gewählten Schlüssels und des Werbungs-ID-Formats sowie in Abhängigkeit vom gewünschten Grad der Sicherheit gewählt, bspw. die Bildung alphanumerischer Prüf- oder Quersummen oder eines Hashs mittels einer Hashfunktion. In dieser Ausgestaltung bietet das Verfahren eine weitere Schwelle für Manipulationen gegenüber dem Ad-Server. Da der erste client-Schlüssel und die Funktion zur Generierung eines zweiten client-Schlüssels in dem Video-Player hinterlegt sind, können diese Informationen nur verhältnismäßig schwer ausgespäht werden. Im Falle eines festgestellten Missbrauchs kann die Funktion zur Generierung des zweiten client-Schlüssels oder der im Video-Player hinterlegte erste client-Schlüssel auch einfach, d.h. mit geringem technischem Aufwand, geändert bzw. ausgetauscht werden, ohne dass hierbei Änderungen auf Seiten des Content-Servers erforderlich sind.

Ein zusätzlicher Vorteil wird erreicht, indem dem client in Schritt c. mehrere hierarchisch angeordnete Adressinformationen für Video-Werbemittel übermittelt werden, welche dieser in Schritt d. gemäß ihrer Anordnung abfragt, bis ihm von einer Adresse ein Video-Werbemittel zum Abruf angeboten wird. Dies ermöglicht die Einbindung mehrerer externer Medienserver (z.B. Mediaagenturen), welche nacheinander vom client abgefragt werden können und erhöht bei der Kooperation mit externen Werbepartner (Werbenden oder Mediaagenturen) die Wahrscheinlichkeit, dass ein Video-Werbemittel zur Verfügung steht.

Auf Seiten des Ad-Server-Betreibers wird eine weiter verbesserte Möglichkeit zur Implementierung einer technischen Erfolgskontrolle geschaffen, indem der oder den vom Ad-Server in Schritt c. übermittelten Adressinformation(en) jeweils eine eindeutige Werbemittel-ID zugeordnet ist, wobei dem Ad-Server vom client entweder in Schritt d. nach dem Abruf des Video-Werbemittels oder in Schritt e. mit der Meldung des Abspielens die Werbemittel-ID des abgerufenen Video-Werbemittels übermittelt wird. Anhand der Rückmeldung kann der Ad-Server ermitteln ob ein Video-Werbemittel von einer bestimmten Adresse abgerufen werden konnte, oder nicht. Dies ermöglicht ferner auf Seiten des Ad-Servers auch die Implementierung einer automatisierte Abrechnung von Werbeeinblendungen auf Basis tatsächlich gezeigter, d.h. clientseitig abgerufener und vollständig abgespielter Werbevideos mit dem Werbenden (Advertiser) oder seiner Mediaagentur, da das Video-Werbemittel anhand der Werbemittel-ID einem bestimmten Medienserver zugeordnet werden kann.

In der vorstehenden Ausgestaltung wird bei gleichzeitiger Ausgestaltung des Verfahrens mit der Generierung eines zweiten client-Schlüssels der Manipulationsschutz gegenüber dem Ad-Server weiter erhöht, indem die Übermittlung der Werbemittel-ID in Schritt d. erfolgt und die Funktion zur Generierung eines zweiten client-Schlüssels bei der Generierung des zweiten client-Schlüssels in Schritt d. zusätzlich die Werbemittel-ID des abgerufenen Video-Werbemittels nutzt. Werden dem client in dieser Ausgestaltung mehrere Adressinformationen für Video-Werbemittel übermittelt, ist die konkret zur Bildung des zweiten client-Schlüssels verwendete Werbemittel-ID erst nach dem tatsächlichen Abruf eines Werbemittels bekannt. Hierdurch ist es nahezu unmöglich, die Rückmeldung des Ad-Servers in Schritt f. ohne tatsächlichen Abruf und das Abspielen des Werbevideos manipulativ auszulösen.

Die Erfindung wird nachstehend zur Veranschaulichung anhand eines Ausführungsbeispiels unter Bezugnahme auf die Zeichnung näher beschrieben:

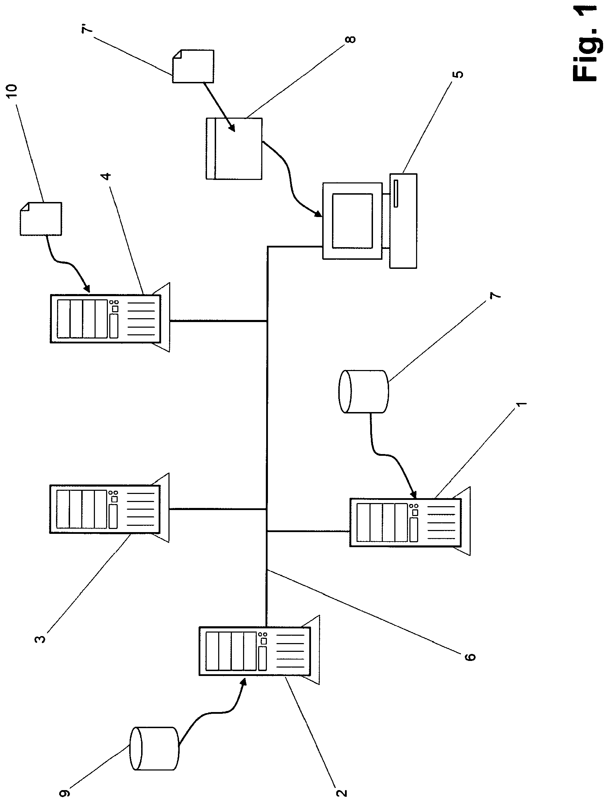

Figur 1 zeigt die schematische Darstellung der technischen Komponenten eines beispielhaften Computersystems zur automatisierten Einbindung externer Video-Werbemittel in browserbasierte Computerspiele innerhalb eines Netzwerks. Das Computersystem umfasst einen Content-Server 1, einen Ad-Server 2, zwei Medien-Server 3 und 4, einen client 5 und ein Netzwerk 6, welches http als Datenübertragungsprotokoll verwendet. Der Content-Server 1 stellt innerhalb des Netzwerks 6 ein browserbasiertes Computerspiel als mittels der Programmierplattform "Adobe Flash" implementierte Spielanwendung 7 zur Verfügung. Der client 5 nimmt an der vom Content-Server 1 zur Verfügung gestellten Spielanwendung 7 teil, indem eine Instanz 7' der Spielanwendung 7 innerhalb der Browsereinrichtung 8 auf dem client 5 aktiv ist. Hierzu ist die Browsereinrichtung 8 mit der Programmerweiterung "Adobe Flash Player" ausgebildet, d.h., dass die Browsereinrichtung 8 mit dem entsprechenden Plug-In (Zusatzprogramm) eingerichtet ist. Der Ad-Server 2 stellt eine beispielhafte Ausgestaltung des erfindungsgemäßen Verfahrens als Werbeeinblendungsanwendung 9 im Netzwerk 6 zur Verfügung. Der Medien-Server 4 stellt innerhalb des Netzwerks 6 ein Video-Werbemittel 10 zur Verfügung.

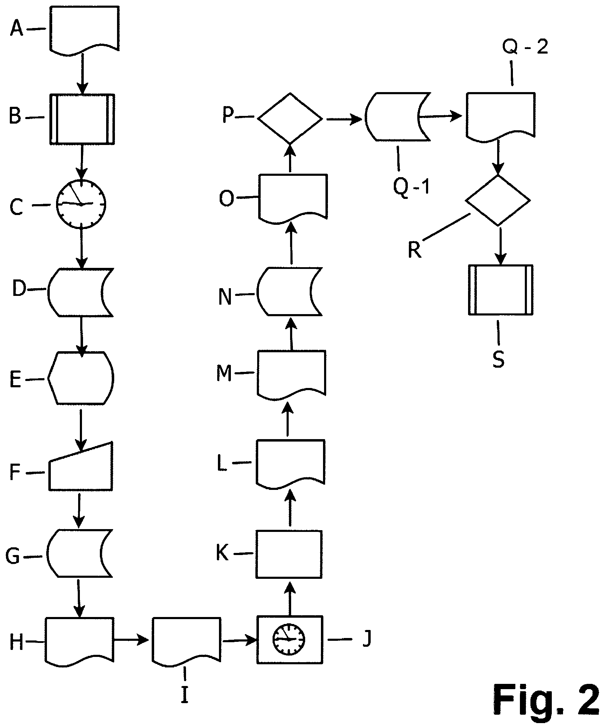

Fig. 2 zeigt einen beispielhaften Verfahrensablauf mit den Schritten A bis S. Die zur Ausführung des Verfahrens erforderlichen Funktionen, Anwendungen und Dienste sind auf den Servern 1 bis 4 und dem client 5 jeweils durch entsprechende programmtechnische Einrichtungen implementiert. Zwischen dem Content-Server 1 und dem Ad-Server 2 sind ein erster fester Schlüssel ("dfgh54ze45zdthd"), ein Format für Werbungs-ID-Werte (nummerisch, natürliche Zahlen) und eine Funktion zur Bildung eines zweiten Schlüssels aus dem ersten Schlüssel und der Werbungs-ID (MD5-hash, 128-Bit-Hashwert als Prüfsumme aus ID und erstem Schlüssel, hexadezimale Darstellung) definiert. In Schritt A. ruft ein Nutzer mit der Browsereinrichtung 8 des clients 5 über das Netzwerk 6 die Spielanwendung 7 vom Content-Server 1 auf. In Schritt B. wird die Spielanwendung 7 als eine Instanz 7' in der Browsereinrichtung 8 des clients 5 ausgeführt. Nach Ablauf des Zeitintervalls C vergibt der Server in Schritt D die eindeutige Werbungs-ID "608504" für das Angebot zum Abspielen einer Video-Werbung. In Schritt E wird dem client 5 vom Content-Server 1 automatisiert ein Angebot zum Abspielen einer Videowerbung in der Browsereinrichtung 8 aktiven Instanz 7' angezeigt. Dieses Angebot besteht aus einem mit einem Hyperlink hinterlegten Text, welcher bei Aktivierung innerhalb der Instanz 7' der Spielanwendung 7 in der Browsereinrichtung 8 des clients 5 einen iframe öffnet, wobei der Hyperlink auf den unter der Domain "ad-server.xy" mit dem Netzwerk 6 konnektierten Ad-Server 2 verweist und der als Parameter die zuvor festgelegte Werbungs-ID (Parameterangabe abgekürzt "vid") enthält:

   ```
<      iframe src='http://media.ad-
      server.xy/www/delivery/afv.php?zoneid=942&vid=608504&cb=
      1348571101733'
      frameborder='0' scrolling='no' width='512' height='320'></iframe>
```

Die vom Content-Server übermittelte "zoneID" dient der näheren Identifizierung der Herkunft der Anfrage auf dem Ad-Server 2. Der weitere Parameter "cb" ist ein zufälliger Wert um das Caching im Browser zu verhindern. Durch den mit dem Hyperlink hinterlegten Text wird dem Nutzer gleichzeitig eine Belohnung für das Ansehen der Videowerbung angeboten, nämlich die Verringerung spielbedingter Wartezeit für die Instanz 7' der Spielanwendung 7 ("Verringerung der Wartezeit? Sieh Dir unser Partnervideo an"). In Schritt F aktiviert der Nutzer den angebotenen Hyperlink und mit dem Aufbau des iframes in der Browsereinrichtung 8 des clients 5 wird eine entsprechende Anfrage an den Ad-Server 2 unter Übergabe der Werbungs-ID ausgeführt. Hierauf erstellt der Ad-Server 2 in Schritt G aus dem Zeitpunkt des Aufrufs einen Zeitstempel anhand der aktuellen Serverzeit "1348584976" und generiert anhand der übermittelten Werbungs-ID, dem Zeitstempel und einem dem auf dem Ad-Server 2 hinterlegten dritten Schlüssel "cafi12ym34dvbfk" eine erweiterte Werbungs-ID2 mit dem Wert "608504-1348584976-d2b3dfee1c6649b330bcd3e3bf6422ee". Die erweiterte Werbungs-ID2 setzt sich hierbei zusammen aus der übermittelten Werbungs-ID, dem Zeitstempel und einem mittels einer entsprechenden Funktion aus diesen Werten und dem dritten Schlüssel "cafi12ym34dvbfk" generierten MD5-Hash "d2b3dfee1c6649b330bcd3e3bf6422ee". Danach übermittelt der Ad-Server 2 als Antwort in Schritt H an den client 5 eine html-Datei, in welcher Anweisungen zum Laden eines Adobe Flash-basierten Video-Players ("player.swf") sowie zum Nachladen einer Javascript-API ("jwplayer.js") und eines VAST-Plugins ("ova-jw.swf") für den Video-Player vom Ad-Server 2 sowie die erweiterte Werbungs-ID2 (Parameterangabe abgekürzt "vid2") und zwei externe Adressinformationen für Video-Werbemittel ("vastUrls") auf den unter der Domain "media-server3.xy" mit dem Netzwerk 6 konnektierten Medien-Server 3 und auf den unter der Domain "media-server4.xy" mit dem Netzwerk 6 konnektierten Medien-Server 4 enthalten sind:

```
 [...]
       playerConfig: function() {
         return {
        key:'#@0319d75766435697759',
        flashplayer: 'http://media.ad-server.xy/www/video/v1/player.swf',
        height: 320,
        width: 512,
        shownavigation: false,
        showdigits: false,
        showicons: false,
        controlbar: 'none',
        stretching: 'uniform',
        plugins: {
         'http://media.ad-server.xy/www/video/v1/ova-jw.swf: {
           autoPlay: true,
           analytics: { google: { ova: { enable: false} } },
           debug: { levels: 'none' },
           ads: {
            notice: { "textStyle": "smalltext" },
            schedule: []
           }, xsign: { url: 'http://media.ad-server.xy/www/delivery/xs.php', vid2:
              608504-1348584976-d2b3dfee1c6649b330bcd3e3bf6422ee',
              bannerid: 6102, zoneid: 942 }
              [...]
       <script type-text/javascript' src='http://media.ad-
       server.xy/www/video/v1/jwplayer.js'></script><style type='text/css'>
       [...]
       vastUrls:
       [{url: 'http://medien-server3.xy/ad/?l=27253&t=x&rnd=7549aaee2c', bid:
       5755, cid: 2007},
       {url: 'http://medien-server4.xy/adserve/?l=321&t=x&rnd=45add1h', bid:
       6142, cid: 2007},
       [...]
```

Mit der erweiterten Werbungs-ID2 gibt der Ad-Server zur näheren internen Identifikation des Vorgangs gleichzeitig die zonelD zurück und liefert eine "BannerID", über die das Werbemittel im Ad-Server registriert ist. Die vom Ad-Server 2 übermittelten externen Adressinformationen enthalten ferner jeweils eindeutige Werbemittel-ID-Werte ("bid" und "cid"), welche Ihnen vom Ad-Server 2 zur internen Identifizierung des jeweiligen Video-Werbemittels zugeordnet sind. In der vom Ad-Server 2 in Schritt H an den client 5 übermittelten html-Datei ist ferner eine Tracking-Funktionalität enthalten, mit welcher der client 5 dem Ad-Server 2 später den erfolgreichen Abruf eines Video-Werbemittels meldet und hierbei die Werbemittel-ID-Werte des abgerufenen Video-Werbemittels übermittelt:

```
      track: function(r) {
         if (!this.tracking) {
           this.tracking={};
         }
         if (!this.tracking[r.bid]) {
           this.tracking[r.bid] = new Image();
           try {
              this.tracking[r.bid].src = 'http://media.ad-
      serv-
      er2.xy/www/delivery/lg.php?bannerid='+r.bid+'&campaignid='+r.cid+'&zon
      eid='+r.zid+'&cb='+this.rand();
      } catch(e) {} } },
```

In Schritt I lädt die Browsereinrichtung 8 des clients 5 gemäß den in der in Schritt H übermittelten html-Datei enthaltenen Anweisungen den Video-Player und die übrigen Komponenten. In dem Video-Player ist ein auch auf dem Ad-Server 2 vorhandener erster client-Schlüssel ("brfc59de67gmrol") sowie eine Funktion zur Generierung eines zweiten client-Schlüssels als MD5-hash aus dem ersten client-Schlüssel, der erweiterten Werbungs-ID2 sowie der in Schritt E vom Content-Server 1 übermittelten zonelD und der vom Ad-Server2 in Schritt H übermittelten BannerID. In Schritt J führt der innerhalb der Browsereinrichtung 8 des clients 5 geladene Video-Player hierauf eine erste Anfrage zum Abruf eines Video-Werbemittels an den Medien-Server 3 aus:

```
      http://medien-server3.xy/adserve/?l=27253&t=x&rnd=7549aaee2c', bid:
      5755, cid: 2007
```

Da auf diesem Server kein Video-Werbemittel zu Verfügung steht und er innerhalb eines definierten Zeitraums (Timeout) keine Antwort erhält, führt der Video-Player in Schritt K eine weitere Anfrage an den Medien-Server 4 aus:

```
       http://medien-server4.xy/ad/?l=27253&t=x&rnd=45add1h', bid: 6142, cid:
       2007
```

Der Medien-Server 4 liefert hierauf in Schritt L als Antwort die URL für das Video-Werbemittel an den client 5 aus:

```
       http://medien-server4.xy/media/campaign_11388/AD/Video-
       Werbemittel_400x300.flv
```

Hierauf lädt der Video-Player in Schritt M das Video-Werbemittel von der mitgeteilten Adresse und meldet den erfolgreichen Werbekontakt an den Ad-Server 2, wobei er diesem die von ihm zugeordneten Werbemittel-ID-Werte mitteilt:

```
       http://media.ad-
       ser-
       ver.xy/www/delivery/lg.php?bid=6142&cid=2007&zoneid=942&cb=610223
       57082
```

In Schritt N generiert der Video-Player nach dem vollständigen Abspielen des Video-Werbemittels einen zweiten client-Schlüssel anhand des ersten client-Schlüssels "brfc59de67gmrol" sowie der erweiterten Werbungs-ID2, der in Schritt E vom Content-Server 1 übermittelten zonelD und der vom Ad-Server2 in Schritt H übermittelten BannerID einen MD5-Hash (Parameterangabe abgekürzt "clid2"):

```
        clid2: 'cc4fc654270697e375d2d15aa63d0b89'
```

In Schritt O meldet der Video-Player an den Ad-Server 2 das Abspielen der Werbung und übermittelt diesem die erweiterte Werbungs-ID2 und den zuvor generierten zweiten client-Schlüssel sowie zur Identifikation die in Schritt E vom Content-Server 1 übermittelte zoneID und die vom Ad-Server 2 in Schritt H übermittelte BannerID

```
       http://media.ad-server.xy/www/delivery/xs.php?vid2=608504-
       1348584976-
      d2b3dfee1c6649b330bcd3e3bf6422ee&clid2=cc4fc654270697e375d2d15
      aa63d0b89&zoneid=942&bannerid=6102
```

Hierauf verifiziert der Ad-Server 2 in Schritt P
- den übermittelten zweiten client-Schlüssel (clid2) "cc4fc654270697e375d2d15aa63d0b89" anhand des ersten client-Schlüssels "brfc59de67gmrol", der erweiterten Werbungs-ID2, der in Schritt E vom Content-Server 1 übermittelten zonelD und der vom Ad-Server2 in Schritt H übermittelten BannerID:

   ```
     md5('brfc59de67gmrol'.'608504-1348584976-
     d2b3dfee1c6649b330bcd3e3bf6422ee'.'942'.'6102')
```
- zerlegt die übermittelte Werbungs-ID2 (vid2) in ihre Bestandteile Werbungs-ID, Zeitstempel und den MD5-hash und prüft den darin enthaltenen MD5-hash "d2b3dfee1c6649b330bcd3e3bf6422ee" anhand des nur auf dem Ad-Server 2 hinterlegten dritten Schlüssels "cafi12ym34dvbfk", der Werbungs-ID "608504" und dem Zeitstempel "1348584976":

   ```
   md5('cafi12ym34dvbfk' . '608504-1348584976')
```

Da die Verifizierung positiv verläuft, generiert der Ad-Server 2 in Schritt Q-1 einen zweiten Schlüssel anhand des ersten Schlüssels "dfgh54ze45zdthd" und der Werbungs-ID "608504" als neuen MD5-hash "8bff8b96298b3222d0ea95326fe0416f" und übermittelt diese Informationen als XML-Datei an den Video-Player:

```
<?xml version="1.0"?>
      <XSIGN>
        <key>608504</key>
        <sign>8bff8b96298b3222d0ea95326fe0416f</sign>
      </XSIGN>
```

In Schritt Q-2 übermittelt der Videoplayer die vom Ad-Server 2 erhaltene Werbungs-ID und zweiten Schlüssel per PostMessage-Funktion an die übergeordnete Instanz 7' in der Browsereinrichtung 8 auf dem client 5, welche die Werte an den Content-Server weiterreicht:

```
      cli-
      ent%5Fversion=flash%5F48&hash=8bff8b96298b3222d0ea95326fe0416f
      &action=finishVideoAdvertisment&auth=6e5eec9ff2a355eb58fcd832aa08
      a8ba&id=608504&user%5Fsession%5Fid=09YIRHacCfC839wuAfTV6Pc
      40ojemT&user%5Fid=82710
```

Der Content-Server 1 verifiziert in Schritt R den übermittelten zweiten Schlüssel "8bff8b96298b3222d0ea95326fe0416f" anhand der Werbungs-ID "608504" und des ersten Schlüssels "dfgh54ze45zdthd":

```
      md5('dfgh54ze45zdthd'.'608504');
```

Da die Verifizierung positiv verläuft, schaltet der Content-Server 1 in Schritt S die Belohnung frei, indem er die Funktionalität (Verringerung der Wartezeit) die dem Anwender zu Beginn offeriert wurde für die in der Browsereinrichtung 8 des clients 5 aktive Instanz 7' der Spielanwendung 7 vollzieht.

### 4. Kurze Beschreibung der Zeichnungen:

- Fig.1: ist eine schematische Darstellung der verschiedenen technischen Komponenten zur Durchführung eines beispielhaften Verfahrensablaufs.
- Fig. 2: ist eine schematische Darstellung eines beispielshaften Verfahrensablaufs.

### 5. Gewerbliche Anwendbarkeit:

Das erfindungsgemäße Verfahren eignet sich zur automatisierten Einbindung von Videowerbung in browserbasierte Informations- und Unterhaltungsanwendungen (bspw. browserbasierte Computerspiele).

## Patentansprüche

1. Computerimplementiertes Verfahren zur automatisierten Einbindung von Video-Werbemitteln in Browseranwendungen innerhalb eines Netzwerks,
wobei zwischen einem Content-Server und einem Ad-Server ein erster Schlüssel, ein Format für Werbungs-ID-Werte und ein Verfahren zur Bildung eines zweiten Schlüssels aus dem ersten Schlüssel und einer Werbungs-ID definiert sind; umfassend die Schritte
a. Angebot zum Abspielen einer Videowerbung und einer Belohnung innerhalb eines browserbasierten Informationsangebots an einen client durch den Content-Server, wobei die Angebotsinformation eine zuvor durch den Content-Server festgelegte Werbungs-ID enthält und auf den Ad-Server verweist;
b. Übermittlung eines Aufrufs der Videowerbung nebst der ID an den Ad-Server durch den client;
c. Übermittlung eines browserbasierten Video-Players und einer Adressinformation für ein Video-Werbemittel nebst der Werbungs-ID an den client durch den Ad-Server;
d. Abruf und Abspielen des Video-Werbemittels anhand der Adressinformation durch den client;
e. Meldung des Abspielens der Videowerbung und Mitteilung der Werbungs-ID an den Ad-Server durch den client;
f. Generierung eines zweiten Schlüssels anhand der Werbungs-ID und des ersten Schlüssels durch den Ad-Server und Übermittlung an den client;
g. Übermittlung der Werbungs-ID und des zweiten Schlüssels an den Content-Server durch den client;
h. Verifizierung des zweiten Schlüssels durch den Content-Server und Freischaltung der Belohnung durch den Content-Server für den client bei positiver Verifizierung.

2. Verfahren nach Anspruch 1, **dadurch gekennzeichnet, dass** der Ad-Server mit einer Funktion zur Generierung einer erweiterten Werbungs-ID2 ausgebildet ist und in Schritt c. mit der in Schritt b. übermittelten Werbungs-ID und/oder Werten aus Parametern des Aufrufs gemäß Schritt b. und/oder mittels eines eigenen dritten Schlüssels eine erweiterte Werbungs-ID2 generiert, welche er an den client mit der Werbungs-ID und/oder den verwendeten Werten des Aufrufs ausliefert, wobei der client in Schritt e. die Werbungs-ID2 zusätzlich zur Werbungs-ID und/oder den verwendeten Werten des Aufrufs mitteilt und der Ad-Server in Schritt f. den oder die in Schritt e. gelieferten ID-Wert(e) zunächst anhand der Werbungs-ID und/oder den verwendeten Werten des Aufrufs und/oder des dritten Schlüssels verifiziert und das Verfahren nur bei positiver Verifizierung fortführt.

3. Verfahren nach Anspruch 1 oder 2, **dadurch gekennzeichnet, dass** auf dem Ad-Server und in dem in Schritt c. übermittelten Video-Player ein zusätzlicher erster client-Schlüssel hinterlegt und eine Funktion zur Generierung eines zweiten client-Schlüssels aus dem ersten client-Schlüssel und der Werbungs-ID und/oder der Werbungs-ID2 integriert ist, wobei der Video-Player in Schritt e. vor der Meldung einen zweiten client-Schlüssel generiert und diesen in der Meldung zusätzlich mitteilt und der Ad-Server den mitgeteilten zweiten client-Schlüssel in Schritt f. zunächst anhand der verwendeten Werte verifiziert und das Verfahren nur bei positiver Verifizierung fortführt.

4. Verfahren nach einem der Ansprüche 1 bis 3, **dadurch gekennzeichnet, dass** dem client in Schritt c. mehrere hierarchisch angeordnete Adressinformationen für Video-Werbemittel übermittelt werden, welche dieser in Schritt d. gemäß ihrer Anordnung abfragt, bis ihm von einer Adresse ein Video-Werbemittel zum Abruf angeboten wird.

5. Verfahren nach einem der Ansprüche 1 bis 4, **dadurch gekennzeichnet, dass** der oder den vom Ad-Server in Schritt c. übermittelten Adressinformation(en) jeweils eine eindeutige Werbemittel-ID zugeordnet ist, wobei dem Ad-Server vom client entweder in Schritt d. nach dem Abruf des Video-Werbemittels oder in Schritt e. mit der Meldung des Abspielens die Werbemittel-ID des abgerufenen Video-Werbemittels übermittelt wird.

6. Verfahren nach den Ansprüchen 3 und 5, wobei die Übermittlung der Werbemittel-ID in Schritt d. erfolgt, **dadurch gekennzeichnet, dass** die Funktion zur Generierung eines zweiten client-Schlüssels bei der Generierung des zweiten client-Schlüssels zusätzlich die Werbemittel-ID des abgerufenen Video-Werbemittels nutzt.

## Claims

1. Computer-implemented method for automatically embedding video advertising items in browser applications within a network, wherein, between a content server and an ad server, a first key, a format for advertisement ID values and a method for generating a second key from the first key and an advertisement ID are defined;
comprising the steps of
a. offer for playing back a video advertisement and for a reward within a browser-based information content to a client by the content server, wherein the offer information includes an advertisement ID previously set by the content server and refers said ID to the ad server;
b. transmission of a request for the video advertisement and the ID to the ad server by the client;
c. transmission of a browser-based video player and a piece of address information for a video advertising item and the advertisement ID to the client by the ad server;
d. retrieval and playback of the video advertising item based on the address information by the client;
e. sending of a notification of the video advertisement being played back and provision of the advertisement ID to the ad server by the client;
f. generating a second key based on the advertisement ID and the first key by the ad server and transmission to the client;
g. transmission of the advertisement ID and the second key to the content server by the client;
h. verification of the second key by the content server and releasing of the reward by the content server for the client in the case of positive verification.

2. Method according to claim 1, **characterized in that** the ad server is configured with a function for generating an extended advertisement ID2 and, in step c., generates an extended advertisement ID2 from the advertisement ID transmitted in step b. and/or parameters of the request according to step b. and/or by means of an own third key, which ID2, together with the advertisement ID and/or the used values of the request, is delivered to the client by the ad server, the client, in step e., providing the advertisement ID2 in addition to the advertisement ID and/or the used values of the request, and the ad server, in step f., first verifying the ID value(s) delivered in step e. on the basis of the advertisement ID and/or the used values of the invocation and/or the third key, and only continuing the method in the case of positive verification.

3. Method according to either claim 1 or claim 2, **characterized in that** on the ad server and in the video player transmitted in step c., an additional first client key is stored and a function for generating a second client key from the first client key and the advertisement ID and/or the advertisement ID2 is integrated, the video player, in step e., generating a second client key before the notification is sent and additionally providing said key in the notification, and the ad server first verifying the provided second client key, in step f., on the basis of the values used, and only continuing the method in the case of positive verification.

4. Method according to any of claims 1 to 3, **characterized in that** a plurality of hierarchically arranged pieces of address information for video advertising items are transmitted to the client in step c., which the client queries in step d. according to the arrangement thereof, until the client is offered, from an address, a video advertising item to be queried.

5. Method according to any of claims 1 to 4, **characterized in that** the piece(s) of address information transmitted from the ad server in step c. is/are associated with a unique advertising item ID in each case, the advertising item ID of the recalled video advertising item being transmitted to the ad server from the client either in step d. after the video advertising item is recalled or in step e. together with the notification of the playback.

6. Method according to claims 3 and 5, the advertising item ID being transmitted in step d., **characterized in that** the function for generating a second client key, when generating the second client key, additionally uses the advertising item ID of the recalled video advertising item.

## Revendications

1. Procédé mis en oeuvre par ordinateur d'affichage automatique de supports publicitaires vidéo dans des applications de navigation au sein d'un réseau, une première clé, un format pour des valeurs d'ID publicitaire et un procédé de formation d'une deuxième clé à partir de la première clé et d'un ID publicitaire étant définis entre un serveur de contenu et un serveur publicitaire ;
comprenant les étapes
a. d'offre de diffusion d'une publicité vidéo et d'une récompense dans le cadre d'une offre d'informations basée sur un navigateur à un client par l'intermédiaire du serveur de contenu, l'information d'offre contenant un ID de publicité préalablement déterminé par le serveur de contenu et faisant référence au serveur publicitaire ;
b. de transmission, par le client, d'un appel de la publicité vidéo avec l'ID au serveur publicitaire ;
c. de transmission au client, par le serveur publicitaire, d'un lecteur vidéo basé sur un navigateur et d'une information d'adresse pour un support publicitaire vidéo avec l'ID publicitaire ;
d. de récupération et de lecture, par le client, du support publicitaire vidéo par l'intermédiaire de l'information d'adresse ;
e. de rapport, par le client, de la lecture de la publicité vidéo et de communication de l'ID publicitaire au serveur publicitaire ;
f. de génération d'une deuxième clé par l'intermédiaire de l'ID publicitaire et de la première clé par le serveur publicitaire, et de transmission au client ;
g. de transmission, par le client, de l'ID publicitaire et de la deuxième clé au serveur de contenu ;
h. de vérification de la deuxième clé par le serveur de contenu et d'activation de la récompense par le serveur de contenu pour le client en cas de vérification positive.

2. Procédé selon la revendication 1, **caractérisé en ce que** le serveur publicitaire est configuré avec une fonction de génération d'un ID2 de publicité étendu et, à l'étape c., génère un ID2 de publicité étendu avec l'ID de publicité transmis à l'étape b. et/ou des valeurs issues des paramètres de l'appel selon l'étape b. et/ou au moyen d'une troisième clé propre, ID2 de publicité que le serveur publicitaire fournit au client avec l'ID publicitaire et/ou les valeurs utilisées de l'appel, le client communiquant, à l'étape e., l'ID2 publicitaire en plus de l'ID publicitaire et/ou des valeurs utilisées de l'appel, et le serveur de publicité vérifiant d'abord, à l'étape f., la ou les valeurs d'ID fournie(s) à l'étape e. par l'intermédiaire de l'ID publicitaire et/ou des valeurs utilisées de l'appel et/ou de la troisième clé, et poursuivant le procédé uniquement en cas de vérification positive.

3. Procédé selon la revendication 1 ou 2, **caractérisé en ce qu'**une première clé-client supplémentaire est déposée sur le serveur publicitaire et dans le lecteur vidéo transmis à l'étape c. et qu'une fonction de génération d'une deuxième clé-client à partir de la première clé-client et de l'ID publicitaire et/ou de l'ID2 publicitaire est intégrée, le lecteur vidéo générant une deuxième clé-client avant la notification à l'étape e., et communiquant en outre celle-ci dans la notification, et le serveur publicitaire vérifiant d'abord la deuxième clé-client communiquée à l'étape f. par l'intermédiaire des valeurs utilisées, et poursuivant le procédé uniquement en cas de vérification positive.

4. Procédé selon l'une quelconque des revendications 1 à 3, **caractérisé en ce qu'**une pluralité d'informations d'adresse ordonnées de manière hiérarchisée pour des supports publicitaires vidéo est transmise au client à l'étape c., informations que le client interroge à l'étape d. conformément à leur disposition jusqu'à ce qu'un support publicitaire vidéo lui soit proposé par une adresse pour l'appel.

5. Procédé selon l'une des revendications 1 à 4, **caractérisé en ce que** l'/les information(s) d'adresse transmise(s) par le serveur publicitaire à l'étape c. reçoivent chacune un ID unique de support publicitaire, le client transmettant l'ID de support publicitaire du support publicitaire vidéo appelé au serveur publicitaire soit à l'étape d. après l'appel du support publicitaire vidéo, soit à l'étape e. avec la notification de lecture.

6. Procédé selon les revendications 3 et 5, dans lequel la transmission de l'ID de support publicitaire a lieu à l'étape d., **caractérisé en ce que** la fonction de génération d'une deuxième clé-client utilise en outre l'ID de support publicitaire du support publicitaire vidéo appelé lors de la génération de la deuxième clé-client.
